# EUROPÄISCHE PATENTSCHRIFT

(11) **EP 4 382 434 B1**
(45) Veröffentlichungstag und Bekanntmachung des Hinweises auf die Patenterteilung: **19.03.2025**
(21) Anmeldenummer: 22212621.1
(22) Anmeldetag: 09.12.2022
(51) Int. Cl.: B64F 5/10, B64C 1/18, B64C 1/06, B64C 1/40

(54) **MONTAGESYSTEM UND VERFAHREN ZUR MONTAGE VON FLUGZEUGSYSTEMKOMPONENTEN IM DREIECKSBEREICH**
MOUNTING SYSTEM AND METHOD FOR MOUNTING AIRCRAFT SYSTEM COMPONENTS TO THE TRIANGULAR AREA
SYSTÈME ET PROCÉDÉ DE MONTAGE DE COMPOSANTS DE SYSTÈME D'AÉRONEF DANS UNE ZONE TRIANGULAIRE

(43) Veröffentlichungstag der Anmeldung: 12.06.2024
(73) Patentinhaber: Airbus Operations GmbH, 21129 Hamburg (DE)
(72) Erfinder: Frankenberger, Eckart, 21129 Hamburg (DE)
(74) Vertreter: Schornack, Oliver

(56) Entgegenhaltungen:
- EP-A1- 3 838 743
- DE-A1- 102012 001 797
- DE-A1- 102019 134 746
- US-A1- 2005 184 194
- US-A1- 2021 188 417

## Beschreibung

Die Erfindung betrifft ein Montagesystem und Verfahren zur Montage von Flugzeugsystemkomponenten in einem Dreiecksbereich in einem Unterdeck eines Flugzeugs. Insbesondere betrifft die Erfindung ein Montagesystem und Verfahren zur Montage von Flugzeugsystemkomponenten mit einer Tragstruktur, die in Längsrichtung des Dreiecksbereichs eingeschoben werden kann.

Im Unterdeck eines Flugzeugs, wie zum Beispiel einem Cargodeck, also in einem Bereich des Flugzeugrumpfs unterhalb eines Zwischenbodens, befinden sich üblicherweise zwei sogenannte Dreiecksbereiche. Diese sind in einer Querschnittsansicht des Flugzeugs jeweils durch die Außenstruktur des Flugzeugrumpfs (zum Beispiel Spanten und Stringer), die Querholme des Zwischenbodens (zum Beispiel die Träger des Zwischenbodens) und sogenannte Z-Streben, die üblicherweise vertikal zwischen einen Träger des Zwischenbodens und einem Spant verlaufen, definiert und befinden sich für gewöhnlich auf beiden Seiten des Flugzeugs. Die Z-Streben dienen insbesondere der Abstützung des Zwischenbodens in vertikaler Richtung sowie einer Aussteifung der Flugzeugstruktur unterhalb des Zwischenbodens.

Der meist relativ rechteckige Raum zwischen den gegenüberliegenden Z-Streben wird üblicherweise als Laderaum oder Installationsraum für Flugzeugtechnik verwendet. Die Dreiecksbereiche hingegen dienen oft der Verlegung von Leitungen entlang der Außenstruktur des Flugzeugrumpfs oder Längsrichtung des Flugzeugs. Normalerweise sind keine störenden Komponenten in den Dreiecksbereichen angeordnet, insbesondere in Querrichtung des Flugzeugs, sodass Leitungen vom Bug bis zum Heck des Flugzeugs oder zumindest von den Tragflächen zum Bug bzw. zum Heck des Flugzeugs in den Dreiecksbereichen verlegt werden können.

Jedoch ist der Arbeitsbereich während der Installation in den Dreiecksbereichen für das entsprechende Personal schwierig zugänglich. Einerseits sind die Z-Streben im Weg, um Leitungen im Dreiecksbereich zu installieren. Andererseits ist aufgrund des Zwischenbodens die Arbeitshöhe beschränkt. Beides führt zu ergonomisch ungünstigen Bedingungen für das Personal.

Es wurde zwar versucht, die Leitungen an der Außenstruktur des Flugzeugs zu befestigen, bevor die Z-Streben eingebaut werden. Dies bedeutet jedoch, dass in diesem Zustand der Zwischenboden entweder noch nicht eingebaut werden kann oder nicht belastet werden kann. Ein Ausbau des Oberdecks muss daher so lange warten, bis die Z-Streben installiert sind. Andererseits ist es aufgrund der Lasteinbringung und auch aufgrund des Abstands zur Außenhaut wünschenswert, Leitungen an den Z-Streben zu befestigen, um nicht sämtliche Halterungen an der Außenstruktur des Flugzeugs anzubringen. Somit ist eine Installation von Leitungen nach Einbau der Z-Streben zu bevorzugen.

Ein entsprechendes Montagesystem und -Verfahren ist aus dem Dokument EP3838743A1 bekannt.

Der Erfindung liegt daher die Aufgabe zugrunde, ein System und Verfahren zur verbesserten Montage von Flugzeugsystemkomponenten bereitzustellen.

Diese Aufgabe wird durch ein Montagesystem mit den Merkmalen des Anspruchs 1 sowie ein Verfahren mit den Merkmalen des Anspruchs 12 gelöst.

Gemäß einem ersten Aspekt zum besseren Verständnis der vorliegenden Offenbarung umfasst ein Montagesystem zur Montage von Flugzeugsystemkomponenten in einem Dreiecksbereich in einem Unterdeck eines Flugzeugs folgende Komponenten: eine langgestreckte Tragstruktur, eine Führungseinrichtung, die an der Tragstruktur befestigt ist und dazu eingerichtet ist, die Tragstruktur zu führen, und mindestens eine Halterung, die an der Tragstruktur befestigt ist und dazu eingerichtet ist, eine langgestreckte Flugzeugsystemkomponente lösbar zu halten.

In dem Flugzeug ist mindestens ein Dreiecksbereich in dem Unterdeck vorhanden. Üblicherweise ist ein Dreiecksbereich auf jeder Seite des Flugzeugs entlang der Längsrichtung des Flugzeugs vorhanden. Diese sind in einer Querschnittsansicht des Flugzeugs jeweils durch die Außenstruktur des Flugzeugrumpfs (zum Beispiel die Spanten und/oder Stringer), die Querholme des Zwischenbodens (zum Beispiel die Träger des Zwischenbodens) oder den Zwischenboden selbst, und sogenannte Z-Streben, die einen Träger des Zwischenbodens (oder den Zwischenbodens selbst) auf einem Spant abstützen und üblicherweise vertikal verlaufen, definiert und befinden sich für gewöhnlich auf beiden Seiten des Flugzeugs.

Der Dreiecksbereich erstreckt sich über eine bestimmte Länge in dem Flugzeug, weshalb diese Erstreckung hier auch als Längsrichtung des Dreiecksbereichs genannt wird. In bestimmten Flugzeugkonfigurationen, zum Beispiel der sogenannten Tiefdecker-Konfiguration, wird der Dreiecksbereich durch einen Flügelmittelkasten und/oder von einem Hauptfahrwerksschacht unterbrochen. Vorwiegend ist die Längsrichtung des Dreiecksbereichs parallel zu der Längsrichtung des Flugzeugs (beispielsweise die Mittelachse von der Nase bis zum Heck des Flugzeugs). Da der Dreiecksbereich auch von der Breite und/oder Außenstruktur des Flugzeugs definiert wird, und diese auch gekrümmt verlaufen kann, kann in diesen Bereichen die Längsrichtung des Dreiecksbereichs von einer Längsrichtung (Längsachse) des Flugzeugs abweichen bzw. schräg dazu verlaufen. Unter der Längsrichtung des Dreiecksbereichs ist somit eine Richtung zu verstehen, die entlang der Außenstruktur des Flugzeugs und/oder entlang der Z-Streben verläuft.

Unter einer langgestreckten Flugzeugsystemkomponente ist eine Komponente zu verstehen, die in eine Richtung größer/länger ist als in andere Richtungen. Insbesondere fallen Leitungen unter solche langgestreckten Flugzeugsystemkomponenten. Beispielsweise können Leitungen für klimatisierte Luft, Abluft, Stauluft, Zapfluft, Hydraulik, Elektrik, Wasser, Abwasser, etc. in den Dreiecksbereichen verlegt werden. Diese Leitungen weisen üblicherweise eine Länge auf, die den Abstand zwischen zwei benachbarten Spanten bzw. Z-Streben in Längsrichtung des Dreiecksbereichs (deutlich) übersteigt. Diese langgestreckten Flugzeugsystemkomponenten können insbesondere eine Länge aufweisen, die eine Vielzahl von Z-Streben überspannt, d. h. entlang der Vielzahl von Z-Streben verlegt sind.

Selbstverständlich können auch (in Längsrichtung) kurze Flugzeugsystemkomponenten durch die mindestens eine Halterung gehalten werden. Allerdings lassen sich Komponenten, die kürzer sind als der Abstand zwischen zwei Z-Streben auch einfacher installieren. Auf jeden Fall, können aber sämtliche Flugzeugsystemkomponenten an der Tragstruktur vormontiert werden, und das außerhalb des Flugzeugrumpfs, wodurch ergonomisch gute Bedingungen geschaffen werden können.

Das Montagesystem umfasst ferner eine Führungsschiene, die dazu eingerichtet ist, in einem Abschnitt des Dreiecksbereichs und in Längsrichtung des Dreiecksbereichs eingelegt zu werden. Der Abschnitt des Dreiecksbereichs wird durch die Spanten und/oder die Z-Streben und/oder einen Querholm oder Träger des Zwischenbodens definiert. Es kann sich beispielhaft um einen unteren Bereich des Dreiecksbereichs handeln. Der Abschnitt kann also beispielsweise ein Bereich auf den Spanten sein oder ein Bereich, in dem die Z-Streben auf dem jeweiligen Spant angebracht sind, darin integriert sind oder anderweitig den Bereich der Spanten kreuzen/berühren. Es kann sich selbstverständlich alternativ oder zusätzlich um einen oberen und/oder seitlichen Bereich des Dreiecksbereichs handeln.

Die Führungseinrichtung ist dazu eingerichtet, entlang der Führungsschiene bewegt zu werden. Beispielsweise kann die Führungseinrichtung in der Führungsschiene bewegt werden, wobei insbesondere eine Bewegung in Längsrichtung des Dreiecksbereichs stattfindet. Die Führung durch die Führungsschiene betrifft daher hauptsächlich eine Abstützung quer zur Längsrichtung der Führungsschiene und somit quer zur Längsrichtung des Dreiecksbereichs.

Ferner ist die Tragstruktur so dimensioniert, dass die Tragstruktur durch die Führungseinrichtung und die Führungsschiene in Längsrichtung des Dreiecksbereichs in den Dreiecksbereich eingeschoben werden kann. Mit anderen Worten weist die Tragstruktur einen Querschnitt auf, der kleiner als der Querschnitt des Dreiecksbereichs ist, sodass sich die Tragstruktur durch den Querschnitt des Dreiecksbereichs bewegen kann, während sie durch die Führungsschiene und Führungseinrichtung geführt wird.

Schließlich ist mindestens ein Abschnitt der Tragstruktur dazu eingerichtet, in eine Richtung senkrecht zur Längsrichtung der Tragstruktur bewegt zu werden. Dabei kann es sich um eine lineare Bewegung, eine Kreisbewegung oder eine Bewegung entlang eines beliebigen Pfades handeln. Der Abschnitt der Tragstruktur, der quer bewegt werden kann, ermöglicht dabei ein Bewegen der mindestens einen Halterung (oder zumindest einer Halterung, falls es sich um eine Mehrzahl von Halterungen handelt), wodurch auch die daran befestigte Flugzeugsystemkomponente bewegt wird. Dadurch lässt sich die Flugzeugsystemkomponente innerhalb des Dreiecksbereichs ausrichten, während sie beim Einschieben in den Dreiecksbereich mit der Tragstruktur einen kompakten Querschnitt aufweist.

Um eine Montage der Flugzeugsystemkomponente in dem Dreiecksbereich zu ermöglichen, dient die Führungsschiene und Führungseinrichtung der Ausrichtung der Flugzeugsystemkomponente in Längsrichtung des Dreiecksbereichs und die Bewegung des mindestens einen Abschnitts der Tragstruktur der Ausrichtung der Flugzeugsystemkomponente in Querrichtung des Dreiecksbereichs.

Die Bewegung des mindestens einen Abschnitts der Tragstruktur kann dabei so gestaltet sein, dass die Flugzeugsystemkomponente innerhalb des Querschnitts des Dreiecksbereichs in ihre Endposition gebracht wird. Beispielsweise kann die Bewegung des mindestens einen Abschnitts eine horizontale und/oder vertikale Bewegungskomponente umfassen, sodass sich die Flugzeugsystemkomponente im Querschnitt des Dreiecksbereichs in (nahezu) jede beliebige Position bewegen lässt.

Letztendlich kann die Flugzeugsystemkomponente in dem Dreiecksbereich befestigt werden. Zum Beispiel kann die Flugzeugsystemkomponente an der Außenstruktur des Flugzeugrumpfs, zum Beispiel einem Spant und/oder Stringer, an einem Querholm des Zwischenbodens, zum Beispiel einem Träger des Zwischenbodens oder dem Zwischenboden selbst, und/oder an einer Z-Strebe befestigt werden.

In einer Ausgestaltungsvariante kann die Tragstruktur mindestens einen Längsträger und eine Mehrzahl von Vertikalträgern umfassen. Der mindestens eine Längsträger erstreckt sich dabei in Längsrichtung des Dreiecksbereichs, während die Mehrzahl von Vertikalträgern jeweils senkrecht dazu und im Wesentlichen vertikal angeordnet sind. Der mindestens eine Längsträger übernimmt dabei die Verteilung der Lasten des Montagesystems in Längsrichtung und auf die Führungseinrichtung.

In einer anderen Ausgestaltungsvariante kann die mindestens eine Halterung an der Mehrzahl von Vertikalträgern befestigt sein. Die Mehrzahl von Vertikalträgern dient daher in erster Linie der Möglichkeit, die mindestens eine Halterung an einer (beliebigen) vertikalen Position innerhalb des Querschnitts des Dreiecksbereichs anzuordnen, sodass die damit gehaltene Flugzeugsystemkomponente in oder nahe ihrer Endposition innerhalb des Querschnitts des Dreiecksbereichs liegt. Ferner ermöglicht ein Vertikalträger auch die Anordnung mehrerer Flugzeugsystemkomponenten übereinander.

In einer weiteren Ausgestaltungsvariante kann der mindestens eine Abschnitt der Tragstruktur ein Vertikalträger der Mehrzahl von Vertikalträgern sein, der in die Richtung senkrecht zur Längsrichtung der Tragstruktur bewegbar ist. Mit anderen Worten wird ein Vertikalträger in einer Ebene parallel zu einem Querschnitt des Dreiecksbereichs bewegt. Dies ermöglicht eine Bewegung einer Flugzeugsystemkomponente innerhalb des Dreiecksbereichs. Bei der Bewegung des Vertikalträgers kann es sich um eine beliebige Bewegung handeln, wie zum Beispiel eine lineare Bewegung, eine Kreisbewegung, eine elliptische Bewegung oder eine Bewegung entlang eines beliebigen Pfades.

In noch einer weiteren Ausgestaltungsvariante kann der eine Vertikalträger über ein Gelenk und eine Spreizvorrichtung mit einem weiteren Vertikalträger der Mehrzahl von Vertikalträgern verbunden sein und relativ zu dem weiteren Vertikalträger gedreht werden. Das Gelenk bildet dabei einen Drehpunkt der Drehbewegung des Vertikalträgers. Die Spreizvorrichtung kann eine beliebige Vorrichtung sein, die in ihrer Länge veränderbar ist und so angeordnet ist, dass ihre Länge einen Abstand zwischen dem Vertikalträger und dem weiteren Vertikalträger bestimmt. Dieser Abstand bestimmt eine Bogenlänge, um die der eine Vertikalträger relativ zu dem weiteren Vertikalträger um das Gelenk gedreht wird.

Alternativ oder zusätzlich kann der eine Vertikalträger über ein Gelenk mit einem Längsträger verbunden sein und relativ zu dem Längsträger gedreht werden. Dabei gelten die gleichen Bedingungen wie oben zu der Drehbewegung des einen Vertikalträgers relativ zu einem weiteren Vertikalträger, wobei anstatt des weiteren Vertikalträgers der Längsträger das feststehende Element bildet.

Ebenfalls alternativ oder zusätzlich kann der weitere Vertikalträger und/oder der Längsträger um das Gelenk gedreht werden. Mit anderen Worten ist die Bewegung der Tragstruktur nicht auf die Drehbewegung des einen Vertikalträgers beschränkt, sondern mehrere Elemente der Tragstruktur können (in Querschnittsansicht des Dreiecksbereichs) gedreht werden. Dies ermöglicht eine kompakte Anordnung der Tragstruktur mit den daran angebrachten Flugzeugsystemkomponenten und eine flexible Bewegung und Ausrichtung der Flugzeugsystemkomponente(n) innerhalb des Dreiecksbereichs.

In einer anderen Ausgestaltungsvariante kann die Tragstruktur mindestens einen quer zur Längsrichtung der Tragstruktur in der Länge veränderbaren Querträger umfassen. Ein Querträger bedeutet hier, dass dieser sich in einer Querschnittebene des Dreiecksbereichs befindet, wobei die Veränderung der Länge des Querträgers innerhalb dieser Ebene erfolgt. Dabei muss es sich nicht notgedrungen um eine lineare Verlängerung handeln, sondern es kann auch eine kreisförmige, elliptische oder beliebige Veränderung zwischen Anfangs und Endpunkt des Querträgers stattfinden.

In noch einer anderen Ausgestaltungsvariante kann eine Halterung der mindestens einen Halterung an einem freien Ende des mindestens einen Querträgers angeordnet sein. Damit lässt sich durch die Längenänderung des Querträgers die Halterung, und somit eine daran gehaltene Flugzeugsystemkomponente innerhalb des Querschnitts des Dreiecksbereichs beliebig in der Lage verändern. Beispielsweise kann die Flugzeugsystemkomponente an ihre endgültige Lage in dem Dreiecksbereich gebracht werden.

In einer Ausgestaltungsvariante kann das Montagesystem ferner eine weitere Führungsschiene, die dazu eingerichtet ist, in einem anderen Abschnitt des Dreiecksbereichs angeordnet zu werden als die (bereits beschriebene) Führungsschiene, und eine weitere Führungseinrichtung, die dazu eingerichtet ist, entlang der weiteren Führungsschiene bewegt zu werden und die Tragstruktur zu führen, umfassen. Beispielsweise kann eine Bewegung in Längsrichtung des Dreiecksbereichs stattfindet.

Die zuerst beschriebene Führungsschiene kann beispielsweise in einem unteren oder seitlichen Abschnitt des Dreiecksbereichs angeordnet werden. Die weitere Führungsschiene kann beispielsweise in einem oberen oder seitlichen Abschnitt des Dreiecksbereichs angeordnet werden.

Die untere und obere Führungsschiene ist optimiert für eine vertikale Abstützung der Last des Montagesystems und eine Stützung von Kraftkomponenten quer (horizontal) zur Längsrichtung der jeweiligen Führungsschiene und somit quer zur Längsrichtung des Dreiecksbereichs. Eine seitliche Führungsschiene ermöglich von vorneherein eine seitliche Führung, also Stützung gegenüber Querkräften (Horizontalkräften), während vertikale Lastkomponenten anderweitig in die jeweilige Führungsschiene eingeleitet werden müssen.

In jedem Fall wird die Tragstruktur in Querrichtung des Dreiecksbereichs durch die Führungsschiene und die weitere Führungsschiene gehalten, während die Tragstruktur einfach in Längsrichtung des Dreiecksbereichs bewegt werden kann. Mit anderen Worten ist die Tragstruktur gegen Kippen gesichert wodurch das Einbringen in den Dreiecksbereichs erleichtert wird.

Selbstverständlich kann das Montagesystem auch mit nur einer Führungsschiene und Führungseinrichtung stabil in den Dreiecksbereich eingebracht werden. So kann das Montagesystem beispielsweise so gestaltet sein, dass sein Schwerpunkt (einschließlich der angebrachten langgestreckten Flugzeugsystemkomponente/n) oberhalb einer Führungsschiene im unteren Abschnitt des Dreiecksbereichs angeordnet ist. Dadurch wird ein Kippen des gesamten Montagesystems erschwert und das Einschieben in den Dreiecksbereichs erleichtert.

Ebenso kann das Montagesystem auch nur mit der Führungsschiene und Führungseinrichtung im oberen Abschnitt des Dreiecksbereichs ausgestattet sein, wobei die Tragstruktur und somit das Montagesystem an der oberen Führungsschiene hängt. Damit ist das Problem des Kippens des Montagesystems nicht gegeben.

In einer weiteren Ausgestaltungsvariante kann die mindestens eine Halterung eine Aufnahmefläche aufweisen, die einem Abschnitt einer äußeren Fläche einer Flugzeugsystemkomponente entspricht. Die Aufnahmefläche kann daher eine beliebige Form einnehmen, die durch den Abschnitt der äußeren Fläche der Flugzeugsystemkomponente bestimmt wird. Somit kann es sich bei Aufnahmefläche und der Fläche der Flugzeugsystemkomponente um einen Ausschnitt eines Zylinders, einer Kugel, eines Quaders, eines Würfels, eines Polygons oder einer beliebigen Form handeln.

Selbstverständlich kann die Aufnahmefläche auch aus einem elastischen Material bestehen oder damit beschichtet sein. Dadurch wird die Flugzeugsystemkomponente einfacher aufgenommen und gehalten, und wird zudem geschützt.

In noch einer weiteren Ausgestaltungsvariante kann die Aufnahmefläche so gestaltet sein, dass sie die Flugzeugsystemkomponente an einer Stelle in Längsrichtung der Komponente berührt, an der die Flugzeugsystemkomponente nicht im Dreiecksbereichs (endgültig) befestigt wird. Damit behindert die Aufnahmefläche und insbesondere die Halterung nicht die Endmontage der Flugzeugsystemkomponente.

In einer weiteren Ausgestaltungsvariante kann die mindestens eine Halterung einen Klettstreifen, der dazu eingerichtet ist, die Flugzeugsystemkomponente zu halten oder zu umgreifen, umfassen. Damit lässt sich die Flugzeugsystemkomponente lösbar an der Halterung und somit an der Tragstruktur befestigen.

Alternativ oder zusätzlich kann die mindestens eine Halterung einen Clip umfasst, der dazu eingerichtet ist, die Flugzeugsystemkomponente lösbar zu halten. Bei dem Clip handelt es sich um eine Halterung mit Klemmfunktion und/oder Einrastfunktion, wobei sich mindestens ein Abschnitt des Clips elastisch verformt, während die Flugzeugsystemkomponente in den Clip geschoben wird, und anschließend die Flugzeugsystemkomponente zumindest abschnittsweise umschließt.

In jedem Fall kann die Halterung so an der Flugzeugsystemkomponente angebracht sein, dass sie eine Endmontageposition der Flugzeugsystemkomponente nicht behindert. Lediglich als Beispiel kann die Halterung und/oder ein Vertikalträger, an dem die Halterung befestigt ist, in Längsrichtung des Dreiecksbereichs beabstandet von einem Spant oder einer Z-Strebe angeordnet sein. Üblicherweise sind die Halterungen für die Endmontage der Flugzeugsystemkomponente an einem Spant oder einer Z-Strebe (oder einem Querträger des Zwischenbodens) vorgesehen.

In noch einer weiteren Ausgestaltungsvariante kann das Montagesystem ferner eine zweiteilige Montagevorrichtung umfassen, wobei ein erster Teil der Montagevorrichtung dazu eingerichtet ist, an der Flugzeugsystemkomponente befestigt zu werden und diese zu tragen, und ein zweiter Teil der Montagevorrichtung dazu eingerichtet ist, an einer Z-Strebe, einem Querholm (Träger) des Zwischenbodens oder einem Spant (Rahmen) des Flugzeugs befestigt zu werden. Dadurch lässt sich ein Teil der Montagevorrichtung bereits an der Flugzeugsystemkomponente anbringen, bevor diese mit der Tragstruktur in den Dreiecksbereich eingeschoben wird. Dies erleichtert die Endmontage der Flugzeugsystemkomponente.

In einer Ausgestaltungsvariante kann die zweiteilige Montagevorrichtung eine Steckverbindung, eine Rastverbindung, eine Schienenverbindung, eine Schraubverbindung und/oder eine Einspannverbindung umfassen.

Hierbei kann die zweiteilige Montagevorrichtung so ausgestaltet sein, dass die beiden Teile der Montagevorrichtung in einer Richtung zusammengeführt werden (um die Endmontageposition zu erreichen), die einer Bewegungsrichtung entspricht, die die Flugzeugsystemkomponente bei der Bewegung des Abschnitts der Tragstruktur senkrecht zur Längsrichtung der Tragstruktur vollführt. Mit anderen Worten wird durch das Bewegen des Abschnitts der Tragstruktur die Flugzeugsystemkomponente nicht nur in ihre endgültige Position gebracht, sondern auch gleichzeitig entsprechende Teile einer Montagevorrichtung zusammengeführt oder ineinander geführt.

Dadurch wird die Montage der Flugzeugsystemkomponente deutlich erleichtert und beschleunigt, da die Flugzeugsystemkomponente in einem einzigen Schritt in ihre Endmontageposition gebracht wird. Insbesondere wenn mehrere Flugzeugsystemkomponenten an der Tragstruktur gehalten werden, die alle auf einmal durch die Bewegung des Abschnitts der Tragstruktur in ihre Endmontageposition gebracht werden, wird die Montage der Flugzeugsystemkomponenten deutlich vereinfacht und beschleunigt.

Gemäß einem zweiten Aspekt zum besseren Verständnis der vorliegenden Offenbarung umfasst ein Verfahren zur Montage einer Flugzeugsystemkomponente in einem Dreiecksbereich in einem Unterdeck eines Flugzeugs folgende Schritte:
- Einbringen einer Führungsschiene in einen Abschnitt des Dreiecksbereichs und in Längsrichtung des Dreiecksbereichs;
- Bereitstellen einer Tragstruktur, die eine Führungseinrichtung und mindestens eine Halterung umfasst;
- Anbringen einer langgestreckten Flugzeugsystemkomponente an der mindestens einen Halterung;
- Einschieben der Tragstruktur in den Dreiecksbereich in Längsrichtung des Dreiecksbereichs durch Bewegen der Tragstruktur entlang der Führungsschiene mittels der Führungseinrichtung;
- Bewegen mindestens eines Abschnitts der Tragstruktur derart in eine Richtung senkrecht zur Längsrichtung der Tragstruktur, dass die langgestreckte Flugzeugsystemkomponente in eine endgültige Montageposition innerhalb des Dreiecksbereichs gebracht wird;
- Befestigen der Flugzeugsystemkomponente an mindestens einer den Dreiecksbereich bildenden Primärstrukturkomponente des Flugzeugs;
- Lösen der Flugzeugsystemkomponente von der mindestens einen Halterung; und
- Herausfahren der Tragstruktur aus dem Dreiecksbereich.

Das Verfahren kann mit einem Montagesystem gemäß dem ersten Aspekt oder einer seiner Ausgestaltungsvarianten oder einer Kombination dieser Varianten durchgeführt werden. Somit gelten die für den ersten Aspekt gemachten Ausführungen gleichermaßen für das Verfahren gemäß dem zweiten Aspekt.

In einer Ausgestaltungsvariante kann das Verfahren ferner ein Anbringen eines ersten Teils einer Montagevorrichtung an der Flugzeugsystemkomponente, und ein Anbringen eines zweiten Teils der Montagevorrichtung an einer Z-Strebe, einem Querholm (Träger) oder einem Spant (Rahmen) des Flugzeugs umfassen. Dabei kann das Befestigen der Flugzeugsystemkomponente ein Verbinden des ersten und des zweiten Teils der Montagevorrichtung umfassen.

Dieses Verbinden kann ebenfalls zeitgleich mit dem Bewegen des mindestens einen Abschnitts der Tragstruktur erfolgen bzw. durch die Bewegung des mindestens einen Abschnitts der Tragstruktur.

In einer weiteren Ausgestaltungsvariante kann das Verfahren ferner ein Entfernen der Führungsschiene aus dem Dreiecksbereich umfassen.

Die oben beschriebenen Aspekte, Ausgestaltungen, Varianten und Beispiele können selbstverständlich kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

Bevorzugte Ausführungsbeispiele der Erfindung werden nun anhand der beigefügten schematischen Zeichnungen näher erläutert, wobei:
- Figur 1: schematisch einen Abschnitt eines Unterdecks eines Flugzeugs mit zwei Dreiecksbereichen zeigt;
- Figur 2: schematisch eine Seitenansicht eines Montagesystems zeigt;
- Figur 3: schematisch eine Querschnittsansicht eines Montagesystems in einem Dreiecksbereich zeigt;
- Figur 4: schematisch eine Querschnittsansicht einer Flugzeugsystemkomponente mit Montagevorrichtung zeigt;
- Figur 5: schematisch eine Querschnittsansicht eines weiteren Montagesystems in einem Dreiecksbereich zeigt;
- Figur 6: schematisch eine Querschnittsansicht noch eines weiteren Montagesystems zeigt; und
- Figur 7: schematisch ein Ablaufdiagramm eines Verfahrens zur Montage einer Flugzeugsystemkomponente zeigt.

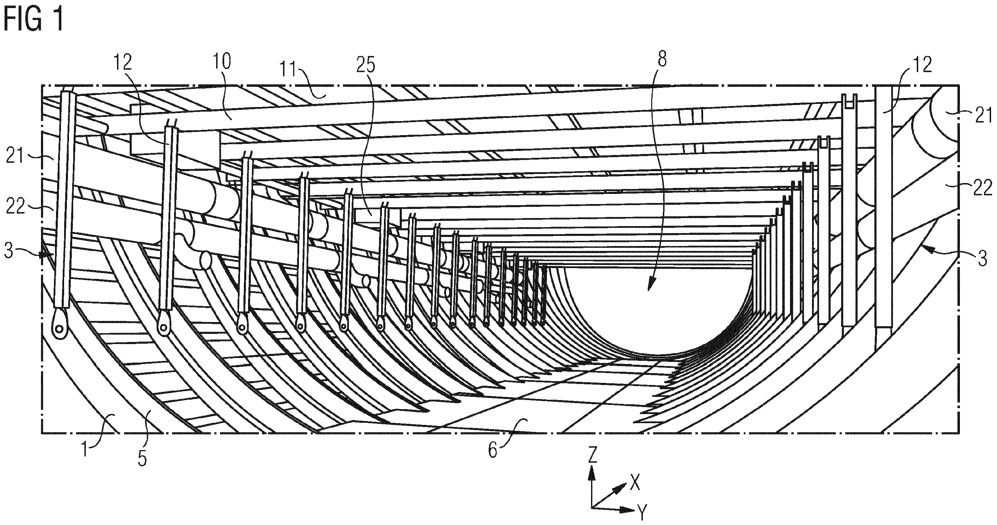

Figur 1 zeigt schematisch einen Abschnitt eines Unterdecks 8 eines Flugzeugs 1 mit zwei Dreiecksbereichen 3. Das Unterdeck 8 des Flugzeugs 1 betrifft einen Abschnitt des Flugzeugs 1, der im Querschnitt des Flugzeugs 1 unten angeordnet ist, wie zum Beispiel das Cargodeck, wie es in Figur 1 mit einem Cargofußboden 6 dargestellt ist. Das Cargodeck 8 wird nach oben durch einen Zwischenboden 11 begrenzt, der zum Beispiel ein Kabinenboden einer darüber angeordneten Passagierkabine ist. Während Querholme oder Träger 10 des Zwischenbodens 11 den Querschnitt des Flugzeugs 1 überspannen, ist eine Abstützung der Träger 10 über Z-Streben 12 statisch und auch zur Vermeidung von Schwingungen sinnvoll. Diese Z-Streben 12 sind unten an den Querholmen oder Trägern 10 angebracht. Zur einfachen Anbringung haben die Querholme oder Träger 10 das gleiche Raster wie Spante oder Rahmen 5 des Flugzeugs 1, wobei die Querholme oder Träger 10 an ihren Enden auch an einem Spant oder Rahmen 5 des Flugzeugs 1 angebracht sind. Die Z-Streben 12 sind somit an ihrem unteren Ende oberhalb eines Spant oder Rahmens 5 angeordnet, sodass sie auch an dem Spant oder Rahmen 5 angebracht werden können.

Diese drei Komponenten (Querholm 10, Spant 5 und Z-Strebe 12) umgeben (definieren) einen Dreiecksbereich 3 im Querschnitt des Flugzeugs 1. Dieser hat eine im Wesentlichen dreiecksförmige Gestalt, wobei auf der Seite des Spant 5 meist eine Rundung des Flugzeugrumpfs vorhanden ist. Einen solchen Dreiecksbereich 3 gibt es üblicherweise auf beiden Seiten des Flugzeugs 1 bzw. an beiden Enden des Querholms oder Trägers 10.

In mindestens einem dieser Dreiecksbereiche 3 sind Flugzeugsystemkomponenten 21, 22 (zusammenfassend mit 20 bezeichnet) untergebracht. Diese langgestreckten Flugzeugsystemkomponenten 20 verlaufen im Wesentlichen entlang der Längsrichtung des Dreiecksbereichs 3. Diese Längsrichtung des Dreiecksbereichs 3 wird durch die Flucht der Z-Streben 12 bzw. der Spante 5 bestimmt. Üblicherweise entspricht diese Längsrichtung der Längsrichtung X des Flugzeugs 1. Jedoch kann sich der Querschnitt des Flugzeugs 1 auch verändern (beispielsweise verjüngen), wodurch die Längsrichtung des Dreiecksbereichs 3 schräg zur Längsachse X des Flugzeugs 1 verlaufen kann.

Im Übrigen entspricht eine vertikale Richtung (in dem Querschnitt des Flugzeugs 1) einer Z-Achse (Vertikalachse), während eine horizontale Richtung (in dem Querschnitt des Flugzeugs 1) einer Y-Achse (Horizontalachse) entspricht. Diese beiden Achsen stehen senkrecht zur Längsachse X des Flugzeugs 1. Die Z-Streben 12 können vertikal angeordnet sein, also parallel zur Z-Achse ausgerichtet sein. Alternativ können die Z-Streben 12 auch schräg zur Z-Achse ausgerichtet sein. Vorteilhafterweise liegen die Z-Streben 12 jedoch in der Querschnittsebene, d. h. in der YZ-Ebene, in der für gewöhnlich auch ein Spant 5 angeordnet ist.

Wie in Figur 1 dargestellt ist, sind die Flugzeugsystemkomponenten 20 bei einer Betrachtung von der Mitte des Flugzeugs 1 aus hinter den Z-Streben 12 angeordnet. Dadurch sind die Flugzeugsystemkomponenten 20 schwierig zu erreichen. Insbesondere während der Installation der Flugzeugsystemkomponenten 20 können die Z-Streben 12 eine Behinderung darstellen.

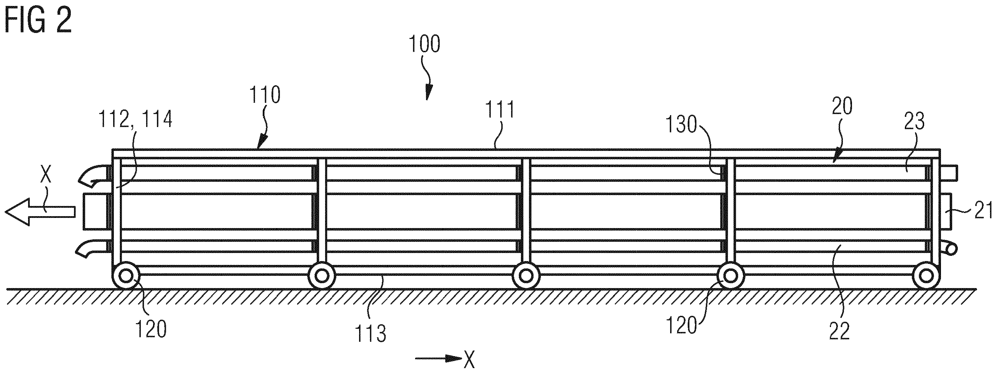

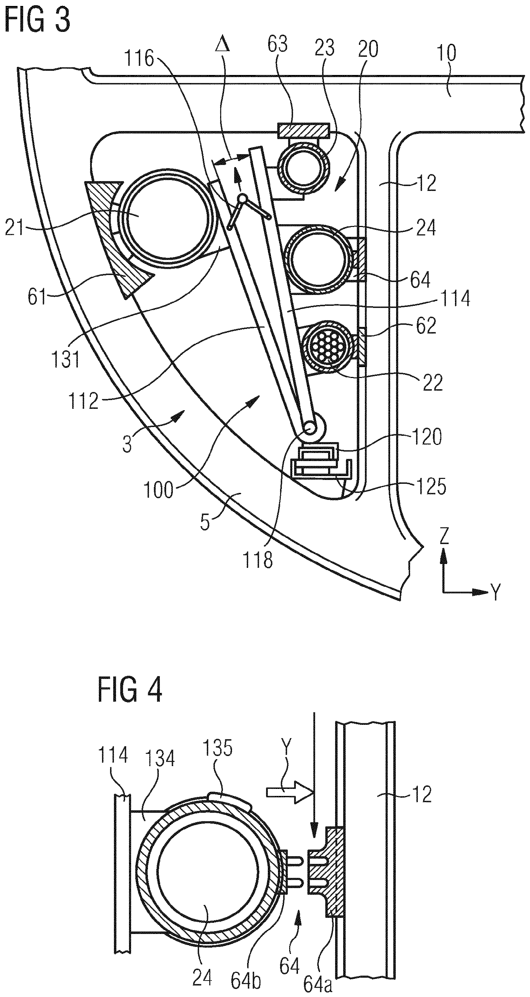

Figur 2 zeigt schematisch eine Seitenansicht eines Montagesystems 100, welches die Montage von Flugzeugsystemkomponenten 20 erleichtert. Das Montagesystem 100 umfasst eine langgestreckte Tragstruktur 110, eine Führungseinrichtung 120 und mindestens eine Halterung 130, die mit Bezug auf die Figuren 3 bis 6 noch näher beschrieben wird.

Die langgestreckte Tragstruktur 110 kann beispielsweise einen oder mehrere Längsträger 111, 113 umfassen, die sich über die Länge der Tragstruktur 110 erstrecken. Dazwischen können Vertikalträger 112, 114 angeordnet sein, die mit den Längsträgern 111, 113 einen Rahmen bilden. Dieser Rahmen bietet eine stabile Struktur, um Flugzeugsystemkomponenten 20 daran zu befestigen.

Die Führungseinrichtung 120 ist in Form von mehreren Rollen 120 dargestellt. Selbstverständlich können andere Formen von Führungseinrichtungen 120 verwendet werden, beispielsweise Gleiter, Walzen, Kugeln, o. ä.

Das Montagesystem 100 kann in Längsrichtung der Tragstruktur 110 (zum Beispiel in Längsrichtung X) bewegt werden, um beispielsweise in einen Dreiecksbereich 3 eingeschoben zu werden.

Figur 3 zeigt schematisch eine Querschnittsansicht eines Montagesystems 100 in einem Dreiecksbereich 3, beispielsweise während das Montagesystem 100 in den Dreiecksbereich 3 eingeschoben wird. Hierfür umfasste das Montagesystem 100 ferner eine Führungsschiene 125, die beispielsweise in einem unteren Abschnitt des Dreiecksbereichs 3 eingelegt ist.

Die Führungseinrichtung 120 kann nun entlang der Führungsschiene 125 bewegt werden. Zum Beispiel kann die Führungsschiene 125 ein U-Profil aufweisen, in dem die Führungseinrichtung 120 gleiten oder rollen kann. Die vertikal angeordneten Schenkel des U-Profils dienen dabei einer seitlichen Abstützung der Führungseinrichtung 120, während die Tragstruktur 110 in den Dreiecksbereich 3 entlang der Führungsschiene 125 eingeschoben wird.

Die Tragstruktur 110 ist dabei so dimensioniert, dass sie in den Querschnitt des Dreiecksbereichs 3 passt und dort hinein eingeschoben werden kann. Mit anderen Worten, und wie in Figur 3 dargestellt, ist der eingenommene Querschnitt der Tragstruktur 110 kleiner als die Querschnittsfläche des Dreiecksbereichs 3. Der eingenommene Querschnitt umfasst hierbei auch die Flugzeugsystemkomponenten 20, die lösbar an der Tragstruktur 110 befestigt sind.

Wie aus Figur 3 und auch Figur 4 ersichtlich ist, weist das Montagesystem 100, insbesondere die Tragstruktur 110, mindestens eine Halterung 130 auf (Halterung 134 für Komponente 24 in Figur 4), an der (jeweils) eine langgestreckte Flugzeugsystemkomponente 20 lösbar gehalten ist. Jede Halterung 130 weist hierfür beispielhaft eine Aufnahmefläche auf, die einem Abschnitt einer äußeren Fläche einer Flugzeugsystemkomponente 20 entspricht. Um die Flugzeugsystemkomponente 20 in dieser Aufnahmefläche zu halten, kann die Halterung 130 ferner ein lösbares Befestigungselement 135 umfassen. Bei dem lösbaren Befestigungselement 135 kann es sich beispielsweise um einen Klettstreifen 135 handeln, der um die Flugzeugsystemkomponente 20 herumgreift. Der Klettstreifen 135 kann durch eine Schlaufe (nicht dargestellt) geführt werden und auf sich selbst verhakt werden, um die Flugzeugsystemkomponente 20 an der Halterung 130 lösbar zu halten.

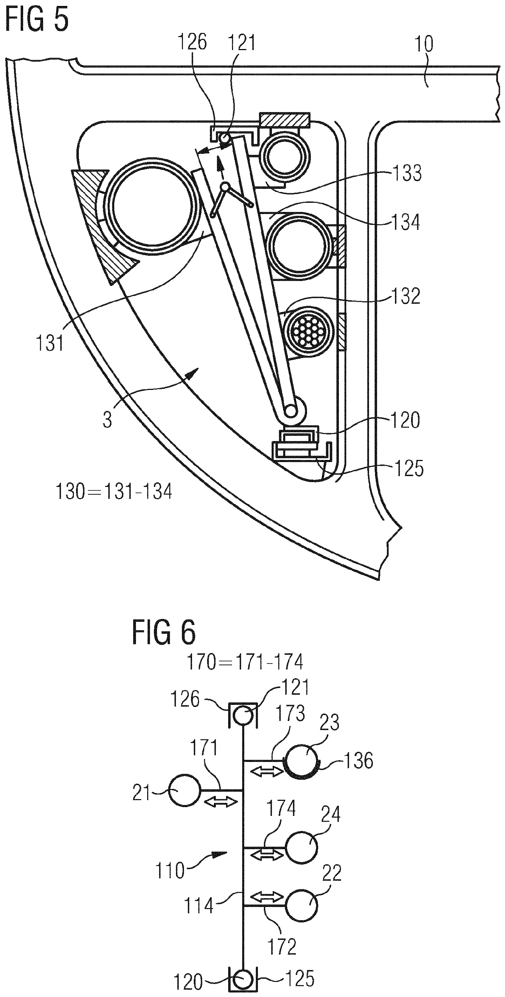

Alternativ oder zusätzlich kann die Halterung 130 einen Clip 136 (siehe Figur 6) umfassen, in den die Flugzeugsystemkomponente 20 lösbar eingesetzt wird. Dabei wird insbesondere eine elastische Verformung des Clips 136 verwendet, um die Flugzeugsystemkomponente 20 zu halten (einzuklemmen). Die Elastizität des Clips 136 ermöglicht hierbei ein einfaches Einsetzen und Herausnehmen der Flugzeugsystemkomponente 20 in die bzw. aus der Halterung 130.

In Figur 3 ist das Montagesystem 100 so dargestellt, dass mehrere Halterungen 130 am Vertikalträger 112, 114 befestigt sind. Dadurch lassen sich mehrere Flugzeugsystemkomponenten 20 übereinander anordnen und in den Dreiecksbereich 3 einschieben.

Ferner zeigt Figur 3 ein Montagesystem 100 mit zwei Vertikalträgern 112, 114, wobei ein Vertikalträger 112 einen Abschnitt der Tragstruktur 110 darstellt, der in eine Richtung senkrecht zur Längsrichtung der Tragstruktur 110 bewegbar ist. Bei der Längsrichtung der Tragstruktur 110 handelt es sich auch um die Längsrichtung des Dreiecksbereichs 3, wenn die Tragstruktur 110 in den Dreiecksbereich 3 eingeschoben wird. In Figur 3 ist die Bewegung des Vertikalträgers 112 durch einen Doppelpfeil dargestellt, wobei ein Winkel Δ zwischen dem einen Vertikalträger 112 und einem weiteren Vertikalträger 114 veränderbar ist.

Lediglich als Beispiel kann der eine Vertikalträger 112 über ein Gelenk 118 mit dem weiteren Vertikalträger 114 verbunden sein, und um das Gelenk 118 relativ zu dem weiteren Vertikalträger 114 drehen. Der (Bogen-) Abstand zwischen den beiden Vertikalträgern 112, 114 kann über eine Spreizvorrichtung 116 bewirkt werden, oder über ein beliebiges Element, das in seiner Längserstreckung veränderbar ist. Bei der Spreizvorrichtung 116 kann es sich beispielsweise um eine mittels Motor drehbare Gewindestange mit Nuss, aber auch um einen Aktuator (elektrisch, pneumatisch und/oder hydraulisch betrieben) oder einen Linearmotor handeln.

Anstatt des Gelenks 118 kann der eine Vertikalträger 112 auch über zwei Spreizvorrichtung 116 an dem weiteren Vertikalträger 114 befestigt sein. Dadurch lassen sich die beiden Vertikalträger 112, 114 relativ zueinander bewegen, wobei auch Kippbewegungen eines oder beider Vertikalträger 112, 114 (in der dargestellten Querschnittebene) möglich sind.

Die Bewegung des Vertikalträgers 112 oder beider Vertikalträger 112, 114 kann in einfacher Weise durch entsprechendes Personal erfolgen, sobald die Tragstruktur 110 vollständig in Längsrichtung in dem Dreiecksbereich 3 eingeschoben ist. Beispielsweise können eine oder mehrere Spreizvorrichtungen 116 an einem oder beiden Enden der Tragstruktur 110 angebracht sein. Dadurch kann an einer oder zwei Positionen der Tragstruktur 110 die entsprechende Spreizvorrichtung 116 bedient werden. Dies ist deutlich leichter zu bewerkstelligen, als sämtliche Flugzeugsystemkomponenten 20 zwischen den Z-Streben 12 einzufädeln und an entsprechenden Montagevorrichtungen zu befestigen.

Sowohl die Vertikalträger 112 als auch die weiteren Vertikalträger 114 können jeweils durch Längsträger 111, 113 miteinander verbunden sein und einen Rahmen bilden. Daher reicht eine oder wenige Spreizvorrichtungen 116, um die beiden Rahmen relativ zueinander zu bewegen.

Figur 4 zeigt schematisch eine Querschnittsansicht einer Flugzeugsystemkomponente 24 mit Montagevorrichtung 64, die für jede Flugzeugsystemkomponente 20 in Figur 3 schematisch dargestellt ist, aber nur für eine Flugzeugsystemkomponente 24 beschrieben wird. Für die anderen Flugzeugsystemkomponenten 21, 22, 23 gilt das Beschriebene gleichermaßen.

Die Flugzeugsystemkomponente 24 ist an der Halterung 134 mit einem Klettverschluss 135 befestigt. Ferner ist ein erster Teil 64a einer Montagevorrichtung 64 an einer Z-Strebe 12 befestigt. Bei der Montagevorrichtung 64 kann es sich um eine endgültige Montagevorrichtung für die Flugzeugsystemkomponente 24 handeln. Ein zweiter Teil 64b der Montagevorrichtung 64 ist an der Flugzeugsystemkomponente 24 befestigt und ist dazu eingerichtet, diese zu tragen. Nach Möglichkeit ist der zweite Teil 64b der Montagevorrichtung 64 in Längsrichtung der Flugzeugsystemkomponente 24 an einer anderen Position befestigt als der Klettstreifen 135, damit sich der Klettstreifen 135 unabhängig von der Montagevorrichtung 64 lösen lässt.

Wieder mit Bezug auf Figur 3 ist es durch eine relative Bewegung zwischen den Vertikalträgern 112, 114 nicht nur möglich, die Flugzeugsystemkomponente 21 nach links zu bewegen, sondern auch die Flugzeugsystemkomponenten 22, 23, 24 nach rechts zu bewegen. Diese Bewegung ist in Figur 4 durch den Pfeil in Richtung Y-Achse dargestellt. Die Montagevorrichtung 64 für die Flugzeugsystemkomponente 24 umfasst in der dargestellten Variante zwei Aufnahmen in dem ersten Teil 64a und zwei zugehörige Stifte in dem zweiten Teil 64b. Dabei sind die Aufnahmen und Stifte so ausgerichtet, dass die Stifte in die Aufnahmen gesteckt werden können. Die Bewegungsrichtung, um die Stifte in die jeweilige Aufnahme zu stecken, ist hierbei so gewählt, dass sie mit der Bewegungsrichtung der Flugzeugsystemkomponente 24 während der Bewegung des Vertikalträgers 114 übereinstimmt. Dadurch lässt sich lediglich durch eine Bewegung des Vertikalträgers 114 die Flugzeugsystemkomponente 24 montieren.

Selbstverständlich kann die Montagevorrichtung 64 anschließend noch durch eine Schraube, Sicherungsstift, oder ähnlichen Verbinder zur Endmontage der Flugzeugsystemkomponente 24 ergänzt werden, wodurch die beiden Teile 64a, 64b der Montagevorrichtung 64 fest miteinander verbunden werden. Schließlich ist die Flugzeugsystemkomponente 24 in ihrer Endposition montiert.

Die übrigen Flugzeugsystemkomponenten 20 werden durch entsprechende Montagevorrichtungen 61, 62, 63 in ihrer Endposition montiert, wobei diese Montagevorrichtungen 61, 62, 63 ebenfalls aus zwei Teilen bestehen können. Aufgrund der unterschiedlichen Anordnung der Flugzeugsystemkomponenten 21-24 sowie der Montagevorrichtungen 61-64 kann der jeweilige zweite Teil dieser Montagevorrichtungen 61-64, der an der Flugzeugsystemkomponente 21-24 befestigt ist, eine andere Relativbewegung zum ersten Teil der jeweiligen Montagevorrichtungen 61-64, der an einer Flugzeugstruktur 5, 10, 12 befestigt ist, ausführen, wenn der Abschnitt der Tragstruktur 110 senkrecht zur Längsachse der Tragstruktur 110 bewegt wird (beispielsweise die Bewegung eines oder beider Vertikalträger 112, 114). Daher können die Montagevorrichtungen 61-64 unterschiedlich ausgestaltet sein. Insbesondere können die Montagevorrichtungen 61-64 nicht nur in Form einer Steckverbindung, sondern auch in Form einer Rastverbindung, einer Schienenverbindung, einer Schraubverbindung und/oder einer Einspannverbindung implementiert werden. Bei der Schienenverbindung kann es sich um eine beliebige Steckverbindung mit verschiedenförmigen schienenähnlichen Elementen anstatt Stiften handeln, wobei die Schienen sich in der Richtung erstrecken, in der der jeweilige zweite Teil (z. B. Teil 62a) bewegt wird. Eine Einspannverbindung kann ein Spannelement umfassen, welches beispielsweise einen Gurt, einen Spannbügel oder eine Schnalle umfasst.

Anschließend kann der Klettstreifen 135 gelöst werden und der mindestens eine Abschnitt der Tragstruktur 110, zum Beispiel der Vertikalträger 114 wieder zurückbewegt werden. Dadurch lässt sich die Tragstruktur 110 aus dem Dreiecksbereich 3 herausfahren, während die Flugzeugsystemkomponenten 20 in ihrer Endposition verbleiben.

Figur 5 zeigt schematisch eine Querschnittsansicht eines weiteren Montagesystems 100 in einem Dreiecksbereich 3. Die meisten Elemente des dargestellten Montagesystems 100 entsprechen denen des Montagesystems 100 aus Figur 3. Daher werden diese gleichen Elemente nicht erneut beschrieben. Figur 5 zeigt jedoch Bezugszeichen, die aus Darstellungsgründen in Figur 3 weggelassen wurden. Im Folgenden werden die Unterschiede der beiden Montagesysteme 100 gemäß Figur 3 und Figur 5 beschrieben.

Das Montagesystem 100 gemäß Figur 5 umfasst eine weitere Führungsschiene 126, die dazu eingerichtet ist, in einem oberen Abschnitt des Dreiecksbereichs 3 angeordnet zu werden. Beispielsweise kann die (obere) weitere Führungsschiene 126 an einem Querholm 10 befestigt werden. Ferner umfasst das Montagesystem 100 eine weitere Führungseinrichtung 121, die dazu eingerichtet ist, sich entlang der weiteren Führungsschiene 126 zu bewegen und die Tragstruktur 110 zu führen. Beispielsweise kann es sich bei der weiteren Führungsschiene 126 um eine Schiene handeln, die lediglich beispielhaft in Figur 5 als umgekehrtes U-Profil dargestellt ist.

Zum Beispiel kann die weitere Führungseinrichtung 121 durch die weitere Führungsschiene 126 in Querrichtung des Dreiecksbereichs 3 gestützt werden. Somit ist die Tragstruktur 110 durch die untere und obere Führungsschiene 125, 126 gegen Kippen geschützt.

Alternativ kann die Tragstruktur 110 auch nur an einer oberen Führungsschiene 126 aufgehängt sein, wodurch ebenfalls ein Kippen ausgeschlossen ist.

Alternativ oder zusätzlich zu den Ausgestaltungen der Figuren 3 oder 5 kann die Tragstruktur 110 an/in einer oder mehreren seitlichen Führungsschienen (nicht dargestellt) geführt werden. Dies ist insbesondere dann hilfreich, wenn sich im unteren und/oder oberen Abschnitt des Dreiecksbereichs 3 Elemente befinden, wie zum Beispiel die in Figur 1 dargestellte Komponente 25.

Bei dieser Komponente 25 kann es sich aber auch um eine Flugzeugsystemkomponente handeln, die mit der Tragstruktur 110 in ihre endgültige Montageposition innerhalb des Dreiecksbereichs 3 eingeschoben wird.

Figur 6 zeigt schließlich schematisch eine Querschnittsansicht noch eines weiteren Montagesystems 100. Gleiche Elemente wie in den Beispielen gemäß Figuren 3 und 5 sind wieder mit gleichen Bezugszeichen versehen, und deren Beschreibung wird hier zur Vermeidung von Wiederholungen weggelassen. Dieses Montagesystem 100 weist mindestens einen quer zur Längsrichtung der Tragstruktur 110 in der Länge veränderbaren Querträger 170 auf. Diese Längenveränderung ist durch einen jeweiligen Doppelpfeil dargestellt. Zum Beispiel kann die Tragstruktur 110 einen oder mehrere Vertikalträger 114 umfassen, wobei jeder der Querträger 170 in eine Richtung von dem Vertikalträger 114 absteht. Ein oder alle Querträger 170 kann/können aber auch an einem Längsträger 111, 113 angebracht werden.

An jedem freien Ende eines solchen Querträgers 170 kann eine der Halterungen 130 angeordnet sein. Somit kann an jedem freien Ende eines Querträgers 170 eine Flugzeugsystemkomponente 20 lösbar gehalten sein. Durch entsprechende Längenveränderung des Querträgers 170 (beispielsweise durch Gewindestange und Nuss, (Linear) Motor, (elektrischen, pneumatischen und/oder hydraulischen) Aktuator, etc.) kann die jeweilige Flugzeugsystemkomponente 20 von dem Vertikalträger 114 entfernt werden. Dabei wird die Flugzeugsystemkomponente 20 in ihre Endmontageposition gebracht. Bei der Bewegung des Querträgers 170 kann es sich neben einer linearen Bewegung auch um eine kreisförmige, elliptische oder beliebige Bewegung entlang eines Pfades handeln. Hierfür kann der Querträger entsprechende lineare und/oder runde Elemente aufweisen, die gegeneinander verschoben/bewegt werden können.

Wie bereits in Bezug auf Figur 3 beschrieben, können die Flugzeugsystemkomponenten 20 hier auch über eine Montagevorrichtung 61-64 an der Flugzeugstruktur 5, 10, 12 befestigt werden. Die jeweilige Montagevorrichtung 61-64 kann ebenfalls wieder aus mindestens zwei Teilen bestehen, die entsprechend der Bewegung der Flugzeugsystemkomponente 20 durch die Bewegung des Querträgers 170 ineinander geschoben werden können und/oder ineinander eingreifen können.

Schließlich zeigt Figur 6 noch schematisch eine Halterung in Form eines Clips 136. Dieser kann in Form eines elastischen Elements an einem Querträger 170 oder auch an einem Vertikalträger 112, 114 oder auch an einem Längsträger 111, 113 angebracht sein und so dimensioniert sein, dass eine Flugzeugsystemkomponente 20 in den Clip 136 eingesetzt werden kann. Aufgrund von elastischen Eigenschaften des Clips 136 kann die jeweilige Flugzeugsystemkomponente 20 lösbar an der Tragstruktur 110 gehalten werden.

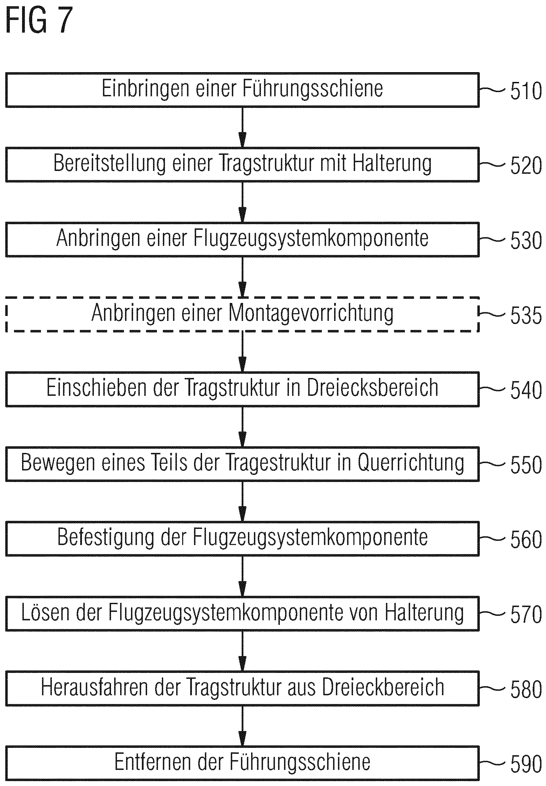

Figur 7 zeigt schematisch ein Ablaufdiagramm eines Verfahrens zur Montage einer Flugzeugsystemkomponenten 20 in einem Dreiecksbereich 3 in einem Unterdeck 8 eines Flugzeugs 1. Dabei wird zunächst in Schritt 510 eine Führungsschiene 125 in den Dreiecksbereich 3 eingebracht.

Ferner wird in Schritt 520 eine Tragstruktur 110 mit einer Führungseinrichtung 120 und mindestens einer Halterung 130 bereitgestellt. An die mindestens eine Halterung 130 wird in einem Schritt 530 eine Flugzeugsystemkomponente 20 angebracht. Optional kann auch eine Montagevorrichtung 61-64 in Schritt 535 angebracht werden. Beispielsweise kann ein Teil der Montagevorrichtung 64 an der Flugzeugsystemkomponente 20 und ein weiterer Teil an einer Flugzeugstruktur 5, 10, 12 befestigt werden. Diese Arbeiten können alle erfolgen, während sich das Montagesystem 100 außerhalb des Flugzeugrumpfs befindet. Dadurch ist ein einfacher, schneller und ergonomisch ausgeglichener Aufbau der Flugzeugsystemkomponenten 20 möglich.

Das so vorgefertigte Montagesystem 100 (insbesondere die Tragstruktur 110 mit angebrachter Flugzeugsystemkomponente 20) wird in Schritt 540 in den Dreiecksbereich 3 eingeschoben. Dabei wird die Tragstruktur 110 entlang der Führungsschiene 125 mittels der Führungseinrichtung 120 bewegt.

Zum Beispiel nach Erreichen der richtigen Position in Längsrichtung des Dreiecksbereichs 3 kann mindestens ein Abschnitt der Tragstruktur 110 in Schritt 550 bewegt werden. Diese Bewegung erfolgt quer zur Längsrichtung der Tragstruktur 110 bis die Flugzeugsystemkomponente 20 eine endgültige Montageposition innerhalb des Dreiecksbereichs 3 eingenommen hat.

Dort kann die Flugzeugsystemkomponente 20 in Schritt 560 an mindestens einer den Dreiecksbereich 3 bildenden Primärstrukturkomponente 5, 10, 12 des Flugzeugs 1 befestigt werden, und die Flugzeugsystemkomponente 20 in Schritt 570 von der Halterung 130 gelöst werden.

Schließlich lässt sich in Schritt 580 die Tragstruktur 110 aus dem Dreiecksbereich 3 herausfahren, und in Schritt 590 die Führungsschiene 125, 126 aus dem Dreiecksbereich 3 entfernen.

## Patentansprüche

1. Montagesystem (100) zur Montage von Flugzeugsystemkomponenten (20) in einem Dreiecksbereich (3) in einem Unterdeck eines Flugzeugs (1), wobei das Montagesystem (100) umfasst:
- eine Tragstruktur (110);
- eine Führungseinrichtung (120), die an der Tragstruktur (110) befestigt ist und dazu eingerichtet ist, die Tragstruktur zu führen;
- mindestens eine Halterung (130), die an der Tragstruktur (110) befestigt ist und dazu eingerichtet ist, eine langgestreckte Flugzeugsystemkomponente (20) lösbar zu halten;
wobei das Montagesystem (100) ferner eine Führungsschiene (125) umfasst,
die Führungseinrichtung (120) dazu eingerichtet ist, entlang der Führungsschiene (125) bewegt zu werden,
die Tragstruktur (110) so dimensioniert ist, dass die Tragstruktur (110) durch die Führungseinrichtung (120) und die Führungsschiene (125) in Längsrichtung des Dreiecksbereichs (3) in den Dreiecksbereich (3) eingeschoben werden kann,
**dadurch gekennzeichnet, dass** die Tragstruktur (110) langgestreckt ist, die Führungsschiene (125) dazu eingerichtet ist, in einem Abschnitt des Dreieckbereichs (3) und in Längsrichtung des Dreieckbereichs (3) eingelegt zu werden, und
mindestens ein Abschnitt der Tragstruktur (110) dazu eingerichtet ist, in eine Richtung senkrecht zur Längsrichtung der Tragstruktur (110) bewegt zu werden.

2. Montagesystem (100) gemäß Anspruch 1, wobei die Tragstruktur (110) mindestens einen Längsträger (111, 113) und eine Mehrzahl von Vertikalträgern (112, 114) umfasst.

3. Montagesystem (100) gemäß Anspruch 2, wobei die mindestens eine Halterung (130) an der Mehrzahl von Vertikalträgern (112, 114) befestigt ist.

4. Montagesystem (100) gemäß Anspruch 2 oder 3, wobei der mindestens eine Abschnitt der Tragstruktur (110) ein Vertikalträger (112) der Mehrzahl von Vertikalträgern (112, 114) ist, der in die Richtung senkrecht zur Längsrichtung der Tragstruktur (110) bewegbar ist.

5. Montagesystem (100) gemäß Anspruch 4, wobei der eine Vertikalträger (112) über ein Gelenk (118) und eine Spreizvorrichtung (116) mit einem weiteren Vertikalträger (114) der Mehrzahl von Vertikalträgern verbunden ist und relativ zu dem weiteren Vertikalträger (114) gedreht werden kann.

6. Montagesystem (100) gemäß einem der Ansprüche 1 bis 5, wobei die Tragstruktur (110) mindestens einen quer zur Längsrichtung der Tragstruktur (110) in der Länge veränderbaren Querträger (170) umfasst, und
wobei eine Halterung der mindestens einen Halterung (130) an einem freien Ende des mindestens einen Querträgers (170) angeordnet ist.

7. Montagesystem (100) gemäß einem der Ansprüche 1 bis 6, ferner umfassend:
- eine weitere Führungsschiene (126), die dazu eingerichtet ist, in einem anderen Abschnitt des Dreiecksbereichs (3) angeordnet zu werden; und
- eine weitere Führungseinrichtung (121), die dazu eingerichtet ist, entlang der weiteren Führungsschiene (126) bewegt zu werden und die Tragstruktur (110) zu führen.

8. Montagesystem (100) gemäß einem der Ansprüche 1 bis 7, wobei die mindestens eine Halterung (130) eine Aufnahmefläche aufweist, die einem Abschnitt einer äußeren Fläche einer Flugzeugsystemkomponente (20) entspricht.

9. Montagesystem (100) gemäß einem der Ansprüche 1 bis 8, wobei die mindestens eine Halterung (130) einen Klettstreifen (135) umfasst, der dazu eingerichtet ist, die Flugzeugsystemkomponente (20) zu halten oder zu umgreifen, und/oder
wobei die mindestens eine Halterung (130) einen Clip (136) umfasst, der dazu eingerichtet ist, die Flugzeugsystemkomponente (20) lösbar zu halten.

10. Montagesystem (100) gemäß einem der Ansprüche 1 bis 9, ferner umfassend:
- eine zweiteilige Montagevorrichtung (61-64), wobei ein erster Teil (64b) der Montagevorrichtung dazu eingerichtet ist, an der Flugzeugsystemkomponente (20) befestigt zu werden und diese zu tragen, und ein zweiter Teil (64a) der Montagevorrichtung dazu eingerichtet ist, an einer Z-Strebe (12), einem Querholm (10) oder einem Rahmen (5) des Flugzeugs (1) befestigt zu werden.

11. Montagesystem (100) gemäß Anspruch 10, wobei die zweiteilige Montagevorrichtung (64) eine Steckverbindung, eine Rastverbindung, eine Schienenverbindung, eine Schraubverbindung und/oder eine Einspannverbindung umfasst.

12. Verfahren zur Montage einer Flugzeugsystemkomponente (20) in einem Dreiecksbereich (3) in einem Unterdeck eines Flugzeugs (1), wobei das Verfahren umfasst:
Einbringen (510) einer Führungsschiene (125) in einen Abschnitt des Dreiecksbereichs (3) und in Längsrichtung des Dreiecksbereichs (3);
Bereitstellen (520) einer Tragstruktur (110), die eine Führungseinrichtung (120) und mindestens eine Halterung (130) umfasst;
Anbringen (530) einer langgestreckten Flugzeugsystemkomponente (20) an der mindestens einen Halterung (130);
Einschieben (540) der Tragstruktur (110) in den Dreiecksbereich (3) in Längsrichtung des Dreiecksbereichs (3) durch Bewegen der Tragstruktur (110) entlang der Führungsschiene (125) mittels der Führungseinrichtung (120);
Bewegen (550) mindestens eines Abschnitts der Tragstruktur (110) derart in eine Richtung senkrecht zur Längsrichtung der Tragstruktur (110), dass die langgestreckte Flugzeugsystemkomponente (20) in eine endgültige Montageposition innerhalb des Dreiecksbereichs (3) gebracht wird;
Befestigen (560) der Flugzeugsystemkomponente (20) an mindestens einer den Dreiecksbereich (3) bildenden Primärstrukturkomponente (5, 10, 12) des Flugzeugs (1);
Lösen (570) der Flugzeugsystemkomponente (20) von der mindestens einen Halterung (130); und
Herausfahren (580) der Tragstruktur (110) aus dem Dreiecksbereich (3).

13. Verfahren gemäß Anspruch 12, ferner umfassend:
Anbringen (535) eines ersten Teils (64a) einer Montagevorrichtung (64) an der Flugzeugsystemkomponente (20); und
Anbringen (535) eines zweiten Teils (64b) der Montagevorrichtung (64) an einer Z-Strebe (12), einem Querholm (10) oder einem Rahmen (5) des Flugzeugs (1),
wobei das Befestigen (560) der Flugzeugsystemkomponente (20) ein Verbinden des ersten und des zweiten Teils (64a, 64b) der Montagevorrichtung (64) umfasst.

14. Verfahren gemäß Anspruch 12 oder 13, ferner umfassend:
Entfernen (590) der Führungsschiene (125) aus dem Dreiecksbereich (3).

## Claims

1. Mounting system (100) for mounting aircraft system components (20) in a triangular region (3) in a lower deck of an aircraft (1), wherein the mounting system (100) comprises:
- a support structure (110);
- a guide mechanism (120) which is fastened to the support structure (110) and is specified to guide the support structure;
- at least one bracket (130) which is fastened to the support structure (110) and is specified to releasably hold an elongate aircraft system component(20);
wherein the mounting system (100) further comprises a guide rail (125);
the guide mechanism (120) being set up to be moved along the guide rail (125),
the support structure (110) being dimensioned such that the support structure (110) can be pushed into the triangular region (3) in the longitudinal direction of the triangular region (3) through the guide mechanism (120) and the guide rail (125),
**characterized in that** the support structure (110) is elongate, the guide rail (125) is specified to be inserted in a portion of the triangular region (3) and in the longitudinal direction of the triangular region (3), and
at least one portion of the support structure (110) is specified to be moved in a direction perpendicular to the longitudinal direction of the support structure (110).

2. Mounting system (100) according to Claim 1, wherein the support structure (110) comprises at least one longitudinal member (111, 113) and a plurality of vertical members (112, 114).

3. Mounting system (100) according to Claim 2, wherein the at least one bracket (130) is fastened to the plurality of vertical members (112, 114).

4. Mounting system (100) according to Claim 2 or 3, wherein the at least one portion of the support structure (110) is a vertical member (112) of the plurality of vertical members (112, 114), which is movable in the direction perpendicular to the longitudinal direction of the support structure (110).

5. Mounting system (100) according to Claim 4, wherein the one vertical member (112) by way of a joint (118) and an expansion device (116) is connected an additional vertical member (114) of the plurality of vertical members, and can be rotated relative to the additional vertical member (114).

6. Mounting system (100) according to one of Claims 1 to 5, wherein the support structure (110) comprises at least one cross member (170) which is adjustable in terms of length transversely to the longitudinal direction of the support structure (110); and
wherein a bracket of the at least one bracket (130) is disposed on a free end of the at least one cross member (170).

7. Mounting system (100) according to one of Claims 1 to 6, furthermore comprising:
- an additional guide rail (126) which is specified to be disposed in another portion of the triangular region (3); and
- an additional guide mechanism (121) which is specified to be moved along the additional guide rail (126) and to guide the support structure (110).

8. Mounting system (100) according to one of Claims 1 to 7, wherein the at least one bracket (130) has a receiving surface which corresponds to a section of an outer surface of an aircraft system component (20).

9. Mounting system (100) according to any one of claims 1 to 8, wherein the at least one bracket (130) comprises a Velcro strip (135), which is designed to hold the aircraft system component (20) or to embrace, and / or
wherein the at least one bracket (130) comprises a clip (136) which is specified to releasably hold the aircraft system component (20).

10. Mounting system (100) according to one of Claims 1 to 9, furthermore comprising:
- a two-piece mounting device (61-64), wherein a first part (64b) of the mounting device is specified to be fastened to and support the aircraft system component (20), and a second part (64a) of the mounting device is specified to be fastened to a Z-strut (12), a crossbeam (10) or a frame (5) of the aircraft (1).

11. Mounting system (100) according to Claim 10, wherein the two-piece mounting device (64) comprises a plug connection, a latching connection, a rail connection, a screw connection and/or a clamping connection.

12. Method for mounting an aircraft system component (20) in a triangular region (3) in a lower deck of an aircraft (1), wherein the method comprises:
introducing (510) a guide rail (125) into a portion of the triangular region (3) and in the longitudinal direction of the triangular region (3);
providing (520) a support structure (110) comprising a guide mechanism (120) and at least one bracket (130);
attaching (530) an elongate aircraft system component (20) to the at least one bracket (130);
pushing (540) the support structure (110) into the triangular region (3) in the longitudinal direction of the triangular region (3) by moving the support structure (110) along the guide rail (125) by means of the guide mechanism (120);
moving (550) at least one portion of the support structure (110) in a direction perpendicular to the longitudinal direction of the support structure (110) in such a manner that the elongate aircraft system component (20) is moved into a final mounting position within the triangular region (3);
Fastening (560) the aircraft system component (20) to at least one primary structural component (5, 10, 12) of the aircraft (1) forming the triangular region (3);
releasing (570) the aircraft system component (20) from the at least one bracket (130); and
extracting (580) the support structure (110) from the triangular region (3).

13. Method according to Claim 12, further comprising:
attaching (535) a first part (64a) of a mounting device (64) to the aircraft system component (20); and
attaching (535) a second part (64b) of the mounting device (64) to a Z-strut (12), crossbeam (10) or frame (5) of the aircraft (1);
wherein the fastening (560) of the aircraft system component (20) comprises connecting the first and second parts (64a, 64b) of the mounting device (64).

14. Method according to Claim 12 or 13, further comprising:
removing (590) the guide rail (125) from the triangular region (3).

## Revendications

1. Système de montage (100) pour monter des composants de système d'aéronef (20) dans une zone triangulaire (3) dans un pont inférieur d'un aéronef (1), le système de montage (100) comprenant :
- une structure porteuse (110) ;
- un dispositif de guidage (120) fixé à la structure porteuse (110) et adapté pour guider la structure porteuse ;
- au moins un dispositif de maintien (130) fixé à la structure porteuse (110) et adapté pour maintenir de manière amovible un composant de système d'aéronef allongé (20) ;
le système de montage (100) comprenant en outre un rail de guidage (125),
le dispositif de guidage (120) étant adapté pour être déplacé le long du rail de guidage (125),
la structure porteuse (110) étant dimensionnée de telle sorte que la structure porteuse (110) peut être insérée dans la zone triangulaire (3) par le dispositif de guidage (120) et le rail de guidage (125) dans la direction longitudinale de la zone triangulaire (3),
**caractérisé en ce que** la structure porteuse (110) est allongée, le rail de guidage (125) est adapté pour être placé dans une section de la zone triangulaire (3) et dans la direction longitudinale de la zone triangulaire (3), et
au moins une section de la structure porteuse (110) est adaptée pour être déplacée dans une direction perpendiculaire à la direction longitudinale de la structure porteuse (110).

2. Système de montage (100) selon la revendication 1, dans lequel la structure porteuse (110) comprend au moins un support longitudinale (111, 113) et une pluralité de supports verticaux (112, 114).

3. Système de montage (100) selon la revendication 2, dans lequel l'au moins un dispositif de maintien (130) est fixé à la pluralité de supports verticaux (112, 114).

4. Système de montage (100) selon la revendication 2 ou 3, dans lequel l'au moins une section de la structure porteuse (110) est un support vertical (112) de la pluralité de supports verticaux (112, 114) qui est mobile dans la direction perpendiculaire à la direction longitudinale de la structure porteuse (110).

5. Système de montage (100) selon la revendication 4, dans lequel l'un des supports verticaux (112) est relié à un autre support vertical (114) de la pluralité de supports verticaux par l'intermédiaire d'une charnière (118) et d'un dispositif d'écartement (116) et peut être tourné par rapport à l'autre support vertical (114).

6. Système de montage (100) selon l'une quelconque des revendications 1 à 5, dans lequel la structure porteuse (110) comprend au moins un support transversal (170) dont la longueur peut être modifiée transversalement à la direction longitudinale de la structure porteuse (110), et
dans lequel un dispositif de maintien de l'au moins un dispositif de maintien (130) est agencé à une extrémité libre de l'au moins un support transversal (170).

7. Système de montage (100) selon l'une quelconque des revendications 1 à 6, comprenant en outre :
- un autre rail de guidage (126) adapté pour être agencé dans une autre section de la zone triangulaire (3) ; et
- un autre dispositif de guidage (121) adapté pour être déplacé le long de l'autre rail de guidage (126) et pour guider la structure porteuse (110).

8. Système de montage (100) selon l'une quelconque des revendications 1 à 7, dans lequel l'au moins un dispositif de maintien (130) présente une surface de réception correspondant à une section d'une surface extérieure d'un composant de système d'aéronef (20).

9. Système de montage (100) selon l'une quelconque des revendications 1 à 8, dans lequel l'au moins un dispositif de maintien (130) comprend une bande Velcro (135) adaptée pour maintenir ou entourer le composant de système d'aéronef (20), et/ou
dans lequel l'au moins un dispositif de maintien (130) comprend un clip (136) adapté pour maintenir de manière amovible le composant de système d'aéronef (20).

10. Système de montage (100) selon l'une quelconque des revendications 1 à 9, comprenant en outre :
- un dispositif de montage en deux parties (61-64), une première partie (64b) du dispositif de montage étant adaptée pour être fixée au composant de système d'aéronef (20) et pour le supporter, et une deuxième partie (64a) du dispositif de montage étant adaptée pour être fixée à une entretoise en Z (12), à une traverse (10) ou à un châssis (5) de l'aéronef (1).

11. Système de montage (100) selon la revendication 10, dans lequel le dispositif de montage en deux parties (64) comprend une connexion par enfichage, une connexion par encliquetage, une connexion par rail, une connexion par vis et/ou une connexion par serrage.

12. Procédé de montage d'un composant de système d'aéronef (20) dans une zone triangulaire (3) dans un pont inférieur d'un aéronef (1), le procédé comprenant :
l'introduction (510) d'un rail de guidage (125) dans une section de la zone triangulaire (3) et dans la direction longitudinale de la zone triangulaire (3) ;
la fourniture (520) d'une structure porteuse (110) comprenant un dispositif de guidage (120) et au moins un dispositif de maintien (130) ;
la disposition (530) d'un composant de système d'aéronef allongé (20) sur l'au moins un dispositif de maintien (130) ;
l'insertion (540) de la structure porteuse (110) dans la zone triangulaire (3) dans la direction longitudinale de la zone triangulaire (3) en déplaçant la structure porteuse (110) le long du rail de guidage (125) au moyen du dispositif de guidage (120) ;
le déplacement (550) d'au moins une section de la structure porteuse (110) dans une direction perpendiculaire à la direction longitudinale de la structure porteuse (110) de telle sorte que le composant de système d'aéronef allongé (20) soit amené dans une position de montage finale à l'intérieur de la zone triangulaire (3) ;
la fixation (560) du composant de système d'aéronef (20) à au moins un composant de structure primaire (5, 10, 12) de l'aéronef (1) formant la zone triangulaire (3) ;
le détachement (570) du composant de système d'aéronef (20) de l'au moins un dispositif de maintien (130) ; et
la sortie (580) de la structure porteuse (110) de la zone triangulaire (3).

13. Procédé selon la revendication 12, comprenant en outre :
la disposition (535) d'une première partie (64a) d'un dispositif de montage (64) sur le composant de système d'aéronef (20) ; et
la disposition (535) d'une deuxième partie (64b) du dispositif de montage (64) sur une entretoise en Z (12), une traverse (10) ou un châssis (5) de l'aéronef (1),
dans lequel la fixation (560) du composant de système d'aéronef (20) comprend une connexion des première et deuxième parties (64a, 64b) du dispositif de montage (64).

14. Procédé selon la revendication 12 ou 13, comprenant en outre :
le retrait (590) du rail de guidage (125) de la zone triangulaire (3).
